# DEMANDE DE BREVET EUROPEEN

(11) **EP 2 661 957 A1**
(43) Date de publication de la demande: **13.11.2013**
(21) Numéro de dépôt: 13164500.4
(22) Date de dépôt: 19.04.2013
(51) Int. Cl.: A01G 17/10, A01G 9/12

(54) **Dispositif de maintien pour branche de plante**

(30) Priorité: 10.05.2012 FR 1254290
(71) Demandeur: A. RAYMOND ET CIE, 38000 Grenoble (FR)
(72) Inventeur: Torres, Josep, 08000 Barcelona (ES)
(74) Mandataire: RACKETTE Partnerschaft Patentanwälte

(57) **Abrégé**

Un dispositif de maintien (1) pour branche (100) de plante, formant une goulotte définissant un logement (5) d'axe longitudinal (A) apte à recevoir ladite branche (100), ladite goulotte étant apte à s'incurver et étant formée par un corps allongé (4), des premières pattes de guidage (2) et des secondes pattes de guidage (3) flexibles et s'étendant directement et respectivement de part et d'autre dudit corps allongé (4), les extrémités desdites premières pattes de guidage (2) et desdites secondes pattes de guidage (3) opposées audit corps allongé (4) étant indépendantes les unes des autres, lesdites butées mécaniques (44, 45) comportant des premières butées mécaniques (44) et des secondes butées mécaniques (45), prévues respectivement de part et d'autre dudit corps allongé (4) et aptes successivement à limiter l'incurvation de ladite goulotte dans un premier et un second sens d'incurvation.

## Description

### Domaine technique

L'invention concerne de façon générale un dispositif de maintien pour branche de plante, formant une goulotte définissant un logement d'axe longitudinal apte à recevoir la branche, la goulotte étant apte à s'incurver sous le poids de la branche dans un plan d'incurvation entre une position au repos dans laquelle l'axe longitudinal est rectiligne et une position de travail dans laquelle l'axe longitudinal est incurvé, le dispositif de maintien comportant des butées mécaniques aptes à limiter l'incurvation

### Technique antérieure

Ce type de dispositifs de maintien est couramment utilisé, notamment pour la culture de plants de tomates. Au fil de la croissance et du mûrissement des tomates, les branches qui les soutiennent subissent un poids de fruits de plus en plus important. Les branches ainsi sollicitées s'incurvent de plus en plus vers le sol ce qui affecte la circulation de la sève dans la branche, nuisant au développement des fruits. Il arrive également que le surpoids des fruits provoque une incurvation excessive pouvant aller jusqu'à la rupture de la branche et à la perte des fruits.

Il existe un certain nombre de dispositifs de maintien se présentant sous la forme d'une goulotte définissant un logement longitudinal apte recevoir la branche, la goulotte étant par ailleurs apte à s'incurver élastiquement sous le poids d'une branche. Le dispositif de maintien est destiné à recevoir l'engagement latéral de la branche selon une direction d'introduction et à s'incurver perpendiculairement à cette direction d'introduction. Ainsi, la goulotte encadre le dessus, le dessous et l'arrière ou l'avant de la branche.

Une telle goulotte peut être délimitée par un bord continu apte à être incurvé, en regard duquel se trouvent des pattes de guidage en L et aptes à se rapprocher les unes des autres lors de l'incurvation du bord continu, jusqu'à être en appui les unes contre les autres pour limiter l'incurvation. Un tel dispositif de maintien est notamment décrit dans la publication EP 0 578 321.

La goulotte peut également être délimitée par des pattes de guidages en U dont les extrémités libres de chaque aile sont reliées entre elles par un corps allongé.

Les dispositifs de maintien connus présentent des inconvénients. Certains sont difficiles à mettre en place, d'autres risquent de détériorer la branche lors de leur mise en place. Pour encore d'autres dispositifs de maintien, la possibilité de croissance de la section de la branche est limitée. De manière générale, la mise en place de tous ces dispositifs de maintien nécessite le respect d'un sens de montage (haut/bas) ce qui en complique l'utilisation. De plus, la pression locale appliquée sur une section de branche guidée par un tel dispositif de maintien peut être inexistante lorsque la section de branche adjacente présente une section plus importante.

### Exposé de l'invention

Le but de l'invention est de remédier à ces inconvénients en proposant une alternative de dispositif de maintien pour branche de plante, facile à fabriquer et à mettre en place sans limitation de sens de montage, permettant le maintien efficace de la branche incurvée sans risque de détérioration de la branche lorsque cette dernière n'a pas encore atteint sa section maximale et lorsqu'elle l'a atteint, évitant qu'une section de branche soit non guidée alors que la section adjacente l'est, assurant une pression de guidage sur l'ensemble du morceau de branche guidé, la pression locale d'une section étant indépendante des dimensions de la section adjacente.

A cet effet, l'invention a pour objet un dispositif de maintien pour branche de plante, formant une goulotte définissant un logement d'axe longitudinal apte à recevoir la branche, la goulotte étant apte à s'incurver sous le poids de la branche dans un plan d'incurvation entre une position au repos dans laquelle l'axe longitudinal est rectiligne et une position de travail dans laquelle l'axe longitudinal est incurvé, le dispositif de maintien comportant des butées mécaniques aptes à limiter l'incurvation, **caractérisé en ce que** la goulotte est formée par un corps allongé s'étendant sur toute la longueur du dispositif de maintien et par des premières pattes de guidage et des secondes pattes de guidage flexibles et s'étendant directement et respectivement de part et d'autre du corps allongé sur la longueur duquel elles sont espacées, les extrémités des premières pattes de guidage et des secondes pattes de guidage opposées au corps allongé étant indépendantes les unes des autres, les butées mécaniques comportant des premières butées mécaniques et des secondes butées mécaniques, prévues respectivement de part et d'autre du corps allongé et aptes successivement à limiter l'incurvation de la goulotte dans un premier et un second sens d'incurvation.

L'idée à la base de l'invention est de prévoir un corps allongé central duquel s'étendent les premières et secondes pattes de guidage dont les extrémités sont disjointes entre elles ainsi que des premières butées mécaniques limitant l'incurvation selon un premier sens d'incurvation et des secondes butées mécaniques limitant l'incurvation selon un second sens d'incurvation. Ainsi, le dispositif de maintien ne comporte pas de sens de montage privilégié et les premières et secondes pattes de guidage guident la branche indépendamment les unes des autres de sorte que la pression que chaque première et seconde patte de guidage applique sur la section de branche qu'elle recouvre dépend de la dimension de cette même section de branche recouverte et non de la dimension de la section adjacente. Ainsi, en cas de variation de section de la branche le long du morceau de branche guidé, chaque section peut être guidée de manière optimale, évitant tout risque de rupture de l'incurvation de la branche préjudiciable à la circulation de la sève.

Le dispositif de maintien selon l'invention peut avantageusement présenter les particularités suivantes :
- le long du corps allongé, les premières pattes de guidage sont disposées longitudinalement en quinconce par rapport aux secondes pattes de guidage. Ainsi, la pression éventuellement exercée par les premières et secondes pattes de guidage sur le morceau de branche guidé est répartie de manière homogène sur toutes les sections le long de la longueur morceau du branche guidé ;
- selon un plan transversal perpendiculaire au plan d'incurvation, les bords latéraux des premières pattes de guidage et les bords latéraux des secondes pattes de guidage sont sensiblement alignés de sorte que, pour chaque section transversale du dispositif de maintien le long de l'axe longitudinal, le logement n'est borné latéralement que par l'une des premières pattes de guidage, secondes pattes de guidage. Ainsi, pour une même section de branche, il n'y a pas de chevauchement, selon la direction perpendiculaire à la direction d'introduction, entre une première et une seconde patte de guidage. De cette façon, aucune section de la branche n'est simultanément sollicitée en guidage par une première et une seconde patte de guidage. De plus, avant l'incurvation, toutes les sections du morceau de branche reçu dans le logement sont guidées par l'une ou l'autre des premières et secondes pattes de guidage, assurant ainsi une sollicitation régulière le long du morceau de branche guidé ;
- le corps allongé est formé d'une paroi s'étendant à l'opposé du logement perpendiculairement au plan d'incurvation sur une hauteur supérieure à l'épaisseur de la paroi de sorte à favoriser l'incurvation selon le plan d'incurvation sensiblement perpendiculaire à ladite direction d'introduction. Cette construction particulière permet de rendre l'orientation du dispositif de maintien intuitif pour sa mise en place sur la branche ;
- la paroi forme une série de créneaux longitudinaux comportant des sommets et des creux reliés entre eux par des fronts latéraux, les sommets étant solidaires des premières pattes de guidage et les creux étant solidaires des secondes pattes de guidage. Cette agencement en créneau permet une économie de matière et un meilleur contrôle de la flexibilité du dispositif de maintien ;
- les premières butées mécaniques comportent des premières languettes d'appui, chacune logée entre deux fronts latéraux reliant un creux aux deux sommets adjacents, les secondes butées mécaniques comportent des secondes languettes d'appui, chacune logée entre deux fronts latéraux reliant un sommet aux deux creux adjacents, les premières butées mécaniques étant agencées pour, lors de l'incurvation dans un premier sens d'incurvation, recevoir l'appui des fronts latéraux sur chacune de ses faces opposées, les secondes butées mécaniques étant agencées pour, lors de l'incurvation dans un second sens d'incurvation opposé au premier sens d'incurvation, recevoir l'appui des fronts latéraux sur chacune de ses faces opposées, et ainsi limiter l'incurvation du dispositif de maintien. Les premières et secondes languettes d'appui forment ainsi des butées mécaniques qui permettent de contrôler efficacement l'incurvation maximale du dispositif de maintien pour éviter toute détérioration de la branche et des fruits qu'elle porte ;
- au moins une partie des premières ou secondes languettes d'appui présentent, dans ledit plan d'incurvation, une longueur de languette sensiblement égale respectivement à la profondeur de sommet et de creux correspondante ;
- le dispositif de maintien comporte au moins une paire de pattes de pincement composée d'une première patte de pincement et d'une seconde patte de pincement s'étendant directement et respectivement de part et d'autre du corps allongé et dont l'écartement de pincement est inférieur à l'écartement de guidage séparant les premières pattes de guidage des secondes pattes de guidage. Ainsi, le maintien efficace de la branche est assurée même lorsqu'elle n'a pas encore atteint sa section maximale;
- les premières pattes de guidage et les secondes pattes de guidage et le corps allongé sont agencés pour que, avant l'incurvation, le dispositif de maintien présente globalement une symétrie par rapport à une droite centrale au dispositif de maintien et sensiblement perpendiculaire audit plan d'incurvation. Cette symétrie facile la fabrication et l'utilisation du dispositif de maintien.

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- les figures 1 et 2 sont des vues en perspective du dispositif de maintien selon l'invention avant utilisation ;
- les figures 3 et 4 sont des vues en perspective du dispositif de maintien des figures précédentes en cours d'utilisation.

### Description des modes de réalisation

En référence aux figures, le dispositif de maintien 1 pour branche 100 de plante selon l'invention, forme une goulotte. Cette goulotte est formée par un corps allongé 4 s'étendant sur toute la longueur du dispositif de maintien 1, et de part et d'autre duquel s'étendent des premières pattes de guidage 2 et des secondes pattes de guidage 3 définissant entre elles un logement 5 d'axe longitudinal A apte à recevoir une branche 100.

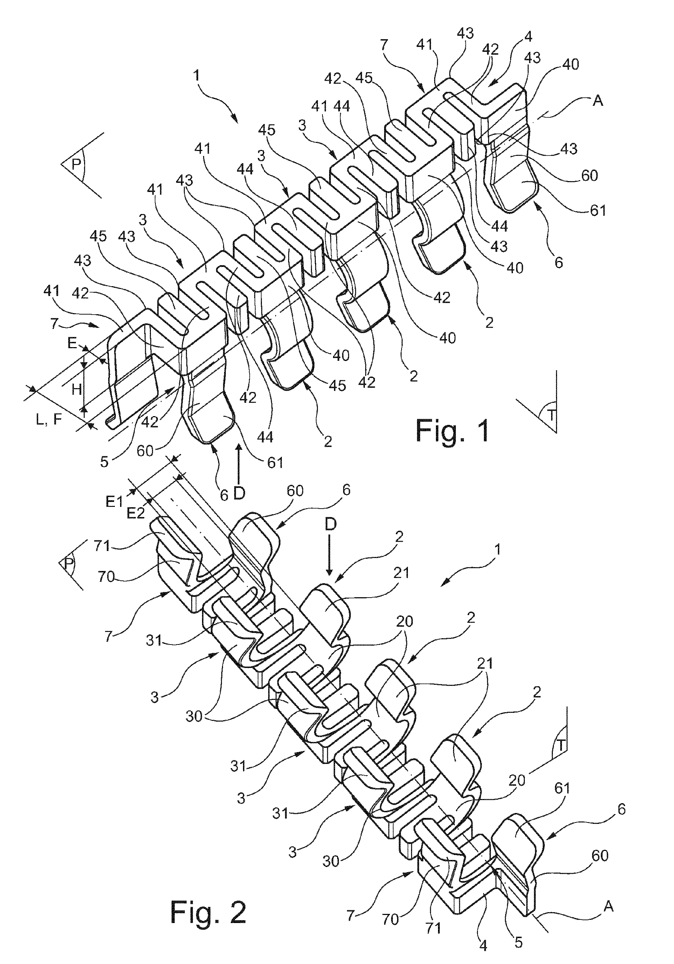

Les premières pattes de guidage 2 sont flexibles et alignées entre elles et les secondes pattes de guidage 3 sont flexibles et alignées entre elles. Ainsi, les premières pattes de guidage 2 sont disposées à l'opposé des secondes pattes de guidage 3 par rapport au logement 5. Les premières pattes de guidage 2 sont espacées entre elles et les secondes pattes de guidage 3 sont également espacées entre elles. De plus, les extrémités des premières et secondes pattes de guidage 2, 3 opposées au corps allongé 4 sont indépendantes les unes des autres. Les premières pattes de guidage 2 sont disposées en quinconce par rapport aux secondes pattes de guidage 3. Selon un plan transversal T perpendiculaire à l'axe longitudinal A, les bords des premières pattes de guidage 2 sont alignés avec les bords des secondes pattes de guidage 3. Quelle que soit la section transversale du dispositif de maintien 1, selon un plan transversal, il n'y a pas de chevauchement entre les premières pattes de guidage 2 et les secondes pattes de guidage 3. De plus, pour chacune de ces sections transversales, le logement est définit par l'une ou l'autre des premières pattes de guidage 2 ou des secondes pattes de guidage 3. Les premières pattes de guidage 2 sont distantes des secondes pattes de guidage 3 desquelles elles sont séparées par un écartement de guidage E1 (visible sur la figure 2) définissant le logement 5. Ce logement 5 présente une ouverture, opposée au corps allongé 4, et orientée selon une direction d'introduction D autorisant l'introduction d'une branche 100 dans le logement 5, par flexion des premières et secondes pattes de guidage 2, 3 dans un plan perpendiculaire à l'axe longitudinal A. Chaque première et seconde patte de guidage 2, 3 comporte une portion incurvée 20, 30, référencée sur la figure 2, orientée vers l'intérieur du logement 5. Chaque portion incurvée 20, 30 est par ailleurs prolongée par une portion rectiligne 21, 31 s'évasant et facilitant l'introduction de la branche 100 dans le logement 5.

En référence à la figure 1, le corps allongé 4 est flexible et comporte une paroi s'étendant à l'opposé du logement 5 et définissant une série de créneaux longitudinaux. Les créneaux sont formés par des sommets 40 et des creux 41 reliés entre eux par des fronts latéraux 42. Dans l'exemple illustré, les sommets 40, les creux 41 et les fronts latéraux 42 sont formés de portions rectilignes définissant entre elles des arêtes 43, détaillées sur la figure 1, qui peuvent avantageusement être arrondies. La hauteur H de la paroi du créneau est supérieure à l'épaisseur E des sommets 40, des creux 41 et des fronts latéraux 42. Ainsi, la construction du corps allongé 4 favorise l'incurvation du dispositif de maintien selon un plan d'incurvation P parallèle à l'axe longitudinal A et traversant les sommets 40, les creux 41 et les fronts latéraux 42. Les arêtes 43 sont sensiblement perpendiculaires au plan d'incurvation P. Les sommets 40 et les creux 41 présentent sensiblement une même longueur pour former des créneaux réguliers. De même les fronts latéraux 42 ont tous une même longueur. Ainsi, la hauteur des créneaux H est sensiblement constante sur toute la longueur du corps allongé 4. De même, l'épaisseur E de la paroi des créneaux est sensiblement constante sur toute la longueur du corps allongé 4.

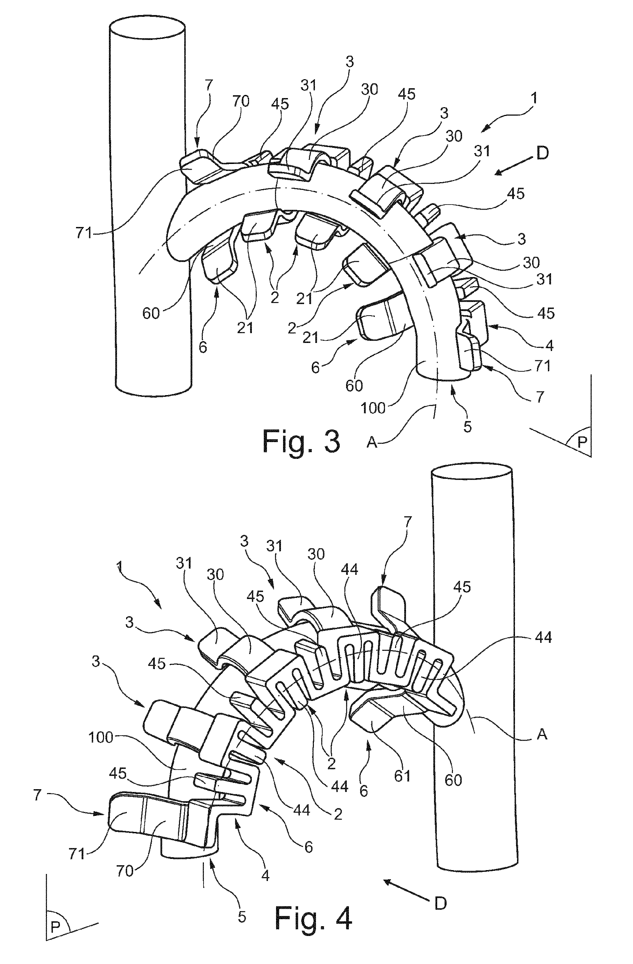

En référence en particulier à la même figure 1, les fronts latéraux 42 reliant chaque creux 41 aux deux sommets 40 adjacents sont séparés entre eux par des premières languettes d'appui 44 présentant une longueur L sensiblement égale à la profondeur de creux F des creux 41. De même, les fronts latéraux 42 reliant chaque sommet 40 aux deux creux 41 adjacents sont séparés entre eux par des secondes languettes d'appui 45 présentant une longueur L sensiblement égale à la profondeur de creux F des sommets 40. Ainsi, comme détaillé plus loin en référence aux figures 3 et 4, lorsque le dispositif de maintien 1 est incurvé dans le plan d'incurvation P, selon un premier sens d'incurvation, en rapprochant les sommets 40 entre eux, les fronts latéraux 42 viennent en appui sur les premières languettes d'appui 44 qui limitent ainsi l'incurvation. De même, lorsque le dispositif de maintien 1 est incurvé dans le plan d'incurvation P, selon un second sens d'incurvation opposé au premier sens d'incurvation, en rapprochant les creux 41 entre eux, les fronts latéraux 42 viennent en appui sur les secondes languettes d'appui 45 qui limitent ainsi l'incurvation. L'incurvation du dispositif de maintien 1 est ainsi contrôlée dans ses deux sens d'incurvation de sorte que le dispositif de maintien 1 peut être utilisé indifféremment dans deux sens de montage.

Hormis pour les sommets 40 et les creux 41 situés aux extrémités du corps allongé 4, chaque sommet 40 est prolongé par une première patte de guidage 2 et chaque creux 41 est prolongé par une seconde patte de guidage 3. Cet agencement particulier permet d'obtenir la disposition en quinconce des premières pattes de guidage 2 et des secondes pattes de guidage 3 précédemment décrite. De plus, le créneau formé par le corps allongé 4 étant régulier, les premières et secondes pattes de guidage 2, 3 sont équidistantes entre elles.

Les sommets 40 situés aux extrémités du corps allongé 4 sont prolongés par des premières pattes de pincement 6 et les creux 41 situés aux extrémités du corps allongé 4 sont prolongés par des secondes pattes de pincement 7. Ainsi, à chacune de ses extrémités, le corps allongé 4 comporte une paire de première et seconde pattes de pincement 6, 7. Les premières et secondes pattes de pincement 6, 7 sont prévues dans l'alignement direct des sommets 40 et creux 41 correspondants. Chaque première patte de pincement 6 est disposée en quinconce par rapport à la seconde patte de pincement 7 avec laquelle elle forme une paire, en suivant la même alternance que celle des premières et secondes pattes de guidage 2, 3. Comme détaillé sur la figure 1, les premières et secondes pattes de pincement 6, 7 sont sensiblement rectilignes et comportent chacune une portion inclinée 60, 70 orientée vers l'intérieur du logement 5 de sorte que l'écartement de pincement E2 (visible sur la figure 2) les séparant soit inférieur à l'écartement de guidage E1 séparant les premières et secondes pattes de guidage 2, 3. Ainsi, les premières et secondes pattes de pincement 6, 7 assurent la fixation du dispositif de maintien 1 sur la branche 100 guidée, même lorsque cette dernière n'a pas atteint sa taille maximale de croissance. Les premières et secondes pattes de pincement 6, 7 se déforment élastiquement lors de l'introduction de la branche 100 dans le logement 5. De plus, les portions inclinées 60, 70 des premières et secondes pattes de pincement 6, 7 sont prolongées par des portions rectilignes 61, 71 s'évasant et facilitant l'insertion de la branche 100 dans le logement 5.

Avant utilisation, le dispositif de maintien 1 est au repos, l'axe longitudinal A est rectiligne. Dans cet état repos, le dispositif de maintien 1 présente globalement une symétrie par rapport à une droite centrale le traversant en son milieu et perpendiculaire au plan d'incurvation P. Ainsi, le dispositif de maintien 1 ne présente pas de sens de montage spécifique, les premières et secondes pattes de guidage 2, 3 pouvant être indifféremment orientées vers le haut ou vers le bas.

Le dispositif de maintien 1 est par exemple réalisé en matériau plastique, en matériau composite ou en tout autre matériau adapté permettant son incurvation élastique et la déformation élastique des premières et secondes pattes de guidage 2, 3 et des premières et secondes pattes de pincement 6, 7.

Pour être mis en place, le dispositif de maintien 1 est présenté sur le coté de la branche 100 de sorte que la direction d'introduction D définie par les premières et secondes pattes de guidage 2, 3 soit sensiblement horizontale. Ensuite, par un mouvement latéral selon la direction d'introduction D et dans un sens d'engagement rapprochant le dispositif de maintien 1 de la branche 100, on engage la branche 100 dans le logement 5. Lors de cet engagement, les premières et secondes pattes de guidage 2, 3 et les premières et secondes pattes de pincement 6, 7 se déforment élastiquement pour autoriser le passage de la branche 100. Une fois l'engagement de la branche 100 réalisé, les premières et secondes pattes de guidage 2, 3 et des premières et secondes pattes de pincement 6, 7 se resserrent élastiquement pour refermer partiellement le logement 5. Les extrémités resserrées des premières et secondes pattes de pincement 6, 7 permettent de garantir le maintien du dispositif de maintien 1 sur la branche 100 quelle que soit la dimension de sa section. La branche 100 est guidée, sur toute la longueur du morceau de branche 100 reçu dans le logement 5, par les différentes premières et secondes pattes de guidage 2, 3. La disposition en quinconce sans chevauchement des premières et secondes pattes de guidage 2, 3 permet que chaque section du morceau de branche 100 soit guidée par une seule première ou seconde patte de guidage 2, 3 indépendamment des sections adjacentes de la branche 100.

Une fois en place, tel qu'illustré par les figures 3 et 4, le dispositif de maintien 1 peut s'incurver progressivement de sa position de repos à sa position de travail en fonction de l'évolution du poids de la branche 100 reçue dans le logement 5. Lorsque les premières pattes de guidage 2 sont disposées vers le bas comme illustré et les secondes pattes de guidage 3 disposées vers le haut, l'incurvation vers le bas de la branche 100 provoque le rapprochement des premières pattes de guidage 2 les unes vers les autres et des sommets 40 les uns vers les autres, et l'éloignement des secondes pattes de guidage 3 les unes des autres et des creux 41 les uns des autres. A l'inverse, lorsque les premières pattes de guidage 2 sont disposées vers le haut et les secondes pattes de guidage 3 disposées vers le bas, l'incurvation vers le bas de la branche 100 provoque le rapprochement des secondes pattes de guidage 3 les unes vers les autres et des creux 41 les uns vers les autres, et l'éloignement des premières pattes de guidage 2 les unes des autres et des sommets 40 les uns des autres.

L'incurvation maximale du dispositif de maintien 1 est contrôlée par les sommets 40 ou les creux 41, en contact respectivement avec les premières ou les secondes languettes d'appui 44, 45 qui forment des butées mécaniques. Ainsi, la branche 100 ne peut s'incurver au-delà d'une configuration d'incurvation maximale prévue pour empêcher la rupture de la branche 100 et garantir la bonne circulation de la sève dans la branche 100.

Pour retirer le dispositif de maintien 1, on redresse la branche 100 de sorte à annuler l'incurvation du dispositif de maintien 1. Ensuite, on retire le dispositif de maintien 1 par un mouvement de retrait selon la direction d'introduction D dans un sens de retrait opposé au sens d'engagement.

L'invention permet d'atteindre les objectifs précédemment mentionnés. En effet, le dispositif de maintien 1 est facile à fabriquer et sa mise en place est facile à obtenir. Grâce aux premières et secondes pattes de pincement 6, 7, le dispositif de maintien 1 reste en place sur la branche 100 même lorsque celle-ci n'a pas encore atteint sa section maximale.

Il va de soi que la présente invention ne saurait être limitée à la description qui précède du mode de réalisation, susceptible de subir quelques modifications sans pour autant sortir du cadre de l'invention.

## Revendications

1. Dispositif de maintien (1) pour branche (100) de plante, formant une goulotte définissant un logement (5) d'axe longitudinal (A) apte à recevoir ladite branche (100), ladite goulotte étant apte à s'incurver sous le poids de ladite branche (100) dans un plan d'incurvation (P) entre une position au repos dans laquelle ledit axe longitudinal (A) est rectiligne et une position de travail dans laquelle ledit axe longitudinal (A) est incurvé, ledit dispositif de maintien (1) comportant des butées mécaniques (44, 45) aptes à limiter ladite incurvation, **caractérisé en ce que** ladite goulotte est formée par un corps allongé (4) s'étendant sur toute la longueur dudit dispositif de maintien (1) et par des premières pattes de guidage (2) et des secondes pattes de guidage (3) flexibles et s'étendant directement et respectivement de part et d'autre dudit corps allongé (4) sur la longueur duquel elles sont espacées, les extrémités desdites premières pattes de guidage (2) et desdites secondes pattes de guidage (3) opposées audit corps allongé (4) étant indépendantes les unes des autres, lesdites butées mécaniques (44, 45) comportant des premières butées mécaniques (44) et des secondes butées mécaniques (45), prévues respectivement de part et d'autre dudit corps allongé (4) et aptes successivement à limiter l'incurvation de ladite goulotte dans un premier et un second sens d'incurvation.

2. Dispositif de maintien (1) selon la revendication 1, **caractérisé en ce que**, le long dudit corps allongé (4), lesdites premières pattes de guidage (2) sont disposées longitudinalement en quinconce par rapport auxdites secondes pattes de guidage (3).

3. Dispositif de maintien (1) selon la revendication 2, **caractérisé en ce que** selon un plan transversal (T) perpendiculaire audit plan d'incurvation (P), les bords latéraux desdites premières pattes de guidage (2) et les bords latéraux desdites secondes pattes de guidage (3) sont sensiblement alignés de sorte que, pour chaque section transversale dudit dispositif de maintien (1) le long dudit axe longitudinal (A), ledit logement (5) n'est borné latéralement que par l'une desdites premières pattes de guidage (2), secondes pattes de guidage (3).

4. Dispositif de maintien (1) selon la revendication 1, **caractérisé en ce que** ledit corps allongé (4) est formé d'une paroi s'étendant à l'opposé dudit logement (5) perpendiculairement audit plan d'incurvation (P) sur une hauteur (H) supérieure à l'épaisseur (E) de ladite paroi de sorte à favoriser ladite incurvation selon ledit plan d'incurvation (P) sensiblement perpendiculaire à ladite direction d'introduction (D).

5. Dispositif de maintien (1) selon la revendication 4, **caractérisé en ce que** ladite paroi forme une série de créneaux longitudinaux comportant des sommets (40) et des creux (41) reliés entre eux par des fronts latéraux (42), lesdits sommets (40) étant solidaires desdites premières pattes de guidage (2) et lesdits creux (41) étant solidaires desdites secondes pattes de guidage (3).

6. Dispositif de maintien (1) selon la revendication 5, **caractérisé en ce que** lesdites premières butées mécaniques (44) comportent des premières languettes d'appui (44), chacune logée entre deux fronts latéraux (42) reliant un creux (41) aux deux sommets (40) adjacents, **en ce que** lesdites secondes butées mécaniques (45) comportent des secondes languettes d'appui (45), chacune logée entre deux fronts latéraux (42) reliant un sommet (40) aux deux creux (41) adjacents, lesdites premières butées mécaniques (44) étant agencées pour, lors de l'incurvation dans un premier sens d'incurvation, recevoir l'appui desdits fronts latéraux (42) sur chacune de ses faces opposées, lesdites secondes butées mécaniques (44) étant agencées pour, lors de l'incurvation dans un second sens d'incurvation opposé audit premier sens d'incurvation, recevoir l'appui desdits fronts latéraux (42) sur chacune de ses faces opposées, et ainsi limiter l'incurvation dudit dispositif de maintien (1).

7. Dispositif de maintien (1) selon la revendication 6, **caractérisé en ce qu'**au moins une partie desdites premières ou secondes languettes d'appui (44, 45) présentent, dans ledit plan d'incurvation (P), une longueur de languette (L) sensiblement égale respectivement à la profondeur de sommet et de creux (P) correspondante.

8. Dispositif de maintien (1) selon la revendication 1, **caractérisé en ce qu'il** comporte au moins une paire de pattes de pincement (6, 7) composée d'une première patte de pincement (6) et d'une seconde patte de pincement (7) s'étendant directement et respectivement de part et d'autre dudit corps allongé (4) et dont l'écartement de pincement (E2) est inférieur à l'écartement de guidage (E1) séparant lesdites premières pattes de guidage (2) desdites secondes pattes de guidage (3).

9. Dispositif de maintien (1) selon la revendication 1, **caractérisé en ce que** lesdites premières pattes de guidage (2), lesdites secondes pattes de guidage (3) et ledit corps allongé (4) sont agencés pour que, avant ladite incurvation, ledit dispositif de maintien (1) présente globalement une symétrie par rapport à une droite centrale audit dispositif de maintien (1) et sensiblement perpendiculaire audit plan d'incurvation (P).
